(19) Europäisches Patentamt
European Patent Office
Office européen des brevets

(11) **EP 4 772 457 A1**

(12) **EUROPEAN PATENT APPLICATION**
published in accordance with Art. 153(4) EPC

(43) Date of publication:
**08.07.2026  Bulletin 2026/28**

(21) Application number: **24869434.1**

(22) Date of filing: **19.12.2024**

(51) International Patent Classification (IPC):
**B65G 1/137** *(2006.01)*    **B65G 1/04** *(2006.01)*

(52) Cooperative Patent Classification (CPC):
**G06Q 10/08743**

(86) International application number:
**PCT/CN2024/140476**

(87) International publication number:
**WO 2026/081339 (23.04.2026 Gazette 2026/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.10.2024  CN 202411433838**

(71) Applicant: **Beijing Jingdong Yuansheng
Technology Co., Ltd.
Beijing 100176 (CN)**

(72) Inventor: **WEI, Yu
Beijing 100031 (CN)**

(74) Representative: **Page White Farrer
Bedford House
21a John Street
London WC1N 2BF (GB)**

(54) **ROUTE PLANNING METHOD AND APPARATUS**

(57)     The present disclosure provides a route planning method and device, and relates to the field of intelligent warehousing. A seed task that a robot must perform is determined according to priority of tasks and distance between the robot and storage locations corresponding to the tasks, a task set to be planned is determined based on the seed task, and a task set required to be performed by the robot and a performing route are determined according to the selected results of various tasks and various road sections that makes the route of the objective function shortest in case that the constraint condition is satisfied. Therefore, the overall route is made to be shortest to maximize the overall efficiency in case that the priority of tasks is ensured.

a seed task that a robot must perform is determined according to priority of tasks and distance between the robot and storage locations corresponding to the tasks — 610

a first task set is determined based on the seed task — 620

a first objective function to realize the shortest route is constructed according to whether road sections between tasks and storage locations corresponding to the first task set are selected as well as a distance of each road section — 630

a first constraint condition of the first objective function is determined — 640

a second task set required to be performed by the robots and a performing route are determined according to the selected results of various tasks and various road sections that makes the route of the first objective function shortest in case that the first constraint condition is satisfied — 650

Fig. 6

EP 4 772 457 A1

# Description

## CROSS-REFERENCE TO RELATED APPLICATIONS

The present application is based on and claims priority of China Patent Application No. 202411433838.X filed on October 14, 2024, the disclosure of which is incorporated into this disclosure by reference in its entirety.

## TECHNICAL FIELD

The present disclosure relates to the field of intelligent warehousing, in particular to a route planning method and device for a robot.

## BACKGROUND

Intelligent warehousing refers to a method of realizing warehouse management and logistics operation by using advanced technology and intelligent system. By integrating technologies such as internet of things, artificial intelligence, and big data analysis, it automatically and intelligently accomplishes the work such as storage, sorting, distribution, and management of goods in the warehouse, which improves the efficiency and accuracy of the warehouse.

In intelligent warehousing, robots play an important role. They can automatically perform various tasks according to preset procedures or instructions, for example, carrying goods and sorting products. The use of robots greatly reduces the time and cost of manual operation and improves the operation efficiency of warehousing.

In some related technologies, a route of performing tasks is planned for a robot according to a time sequence of the tasks, so that the tasks assigned earlier are performed in priority. The overall route thus planned might be relatively long, which affects the overall efficiency.

## SUMMARY

According to some embodiments of the present disclosure, a route planning method is provided. The method comprises: determining a seed task that a robot must perform according to priority of tasks and distance between the robot and storage locations corresponding to the tasks; determining a first task set based on the seed task; constructing a first objective function to realize the shortest route according to whether road sections between tasks and storage locations corresponding to the first task set are selected as well as a distance of each road section; determining a first constraint condition of the first objective function; and determining a second task set required to be performed by the robot and a performing route according to the selected results of various tasks and various road sections that makes the route of the first objective function shortest in case that the first constraint condition is satisfied.

In some embodiments, the determining a seed task that a robot must perform comprises: selecting a storage location closest to the robot as a seed storage location from various storage locations corresponding to a group of tasks with a highest priority; and determining a task corresponding to the seed storage as the seed task that the robot must perform.

In some embodiments, the determining a first task set comprises: determining the first task set based on the seed task, by combining at least one of task types or priority of tasks.

In some embodiments, the determining a first task set comprises: adding the seed task to the first task set; and selecting a task from non-seed tasks with the same task type as the seed task and adding the task to the first task set.

In some embodiments, the first constraint condition comprises: all storage locations of the seed task must be selected.

In some embodiments, the first constraint condition also comprises one or more of the following: all storage locations of a task are selected at the same time, or none of the storage locations of a task are selected at the same time; a starting point is a current position of the robot, only with an exit; a storage location is selected at most once; and a storage location has an exit and an entrance in case that the storage location is selected.

In some embodiments, in case that the seed task involves a pickup task, the first constraint condition also comprises one or more of the following: a destination point is a dumping point, only with an entrance; and n tasks are selected at most, wherein n is the number of idle temporary storage devices of the robot, and each temporary storage device is configured to place the goods corresponding to a task.

In some embodiments, the method further comprises: determining the remaining tasks that are not performed in the second task set; adding the remaining tasks and other supplementary tasks with the same task type as the remaining tasks to a third task set; constructing a second objective function to realize the shortest route according to whether road sections between tasks and storage locations corresponding to the third task set are selected as well as a distance of each road section; determining a second constraint condition of the second objective function; and determining a fourth task set required to be performed by the robot and a performing route according to the selected results of various tasks and various road sections that makes the route of the second objective function shortest in case that the second constraint condition is satisfied.

In some embodiments, the second constraint condition comprises: all the storage locations corresponding to the remaining tasks must be selected.

In some embodiments, the second constraint condition also comprises one or more of the following: all storage locations of a task are selected at the same time, or none of the storage locations of a task are selected at the same time; the starting point is a current position of the robot, only with an exit; a storage location is selected at most once; and a storage location has an exit and an entrance in case that it is selected.

In some embodiments, in case that the seed task involves a pickup task, the second constraint condition also comprises one or more of the following: a destination point is a dumping point, only with an entrance; and m tasks are supplemented at most, wherein m is the number of remaining temporary storage devices of the robot, and each temporary storage device is used to place the goods corresponding to a task.

In some embodiments, the method further comprises: determining a priority of a task according to at least one of a wave mode, a task type, an order type and merging time corresponding to the task.

According to some embodiments of the present disclosure, a route planning device is provided. The device comprises: a memory; and a processor coupled to the memory, wherein the processor is configured to perform a route planning method based on instructions stored in the memory.

According to some embodiments of the present disclosure, a route planning device is provided. The device comprises: a module to perform a route planning method.

According to some embodiments of the present disclosure, a computer readable storage medium is provided. The computer readable storage medium stores computer instructions which, when executed by a processor, implement the route planning method.

According to some embodiments of the present disclosure, a computer program product is provided. The computer program product comprises computer instructions which, when executed by a processor, implement the route planning method.

## BRIEF DESCRIPTION OF THE DRAWINGS

The accompanying drawings that need to be used in the description of the embodiments or related art will be briefly described below. The present disclosure can be more clearly understood according to the following detailed description, which proceeds with reference to the accompanying drawings.

It is apparent that the drawings in the following description are merely examples of the present disclosure and for one of ordinary skill in the art, other drawings can be obtained without paying inventive labor.

Fig. 1 shows a schematic view of a shelf and a robot according to some embodiments of the present disclosure.
Fig. 2 and Fig. 3 show perspective schematic views of a forward angle of view and a backward angle of view of a robot for picking goods according to some embodiments of the present disclosure respectively.
Fig. 4 shows a schematic view of warehouse map data according to some embodiments of the present disclosure.
Fig. 5 shows a schematic view of an overall route planning method of some embodiments of the present disclosure.
Fig. 6 shows a schematic view of an initial route planning method according to some embodiments of the present disclosure.
Fig. 7 is a schematic view showing an initial route planning result of some embodiments of the present disclosure.
Fig. 8 shows a schematic view of a supplementary route planning method according to some embodiments of the present disclosure.
Fig. 9 shows a schematic view of a supplementary route planning result according to some embodiments of the present disclosure.
Fig. 10 shows a schematic structural view of a route planning device according to some embodiments of the present disclosure.
Fig. 11 shows a schematic structural view of a route planning device according to some embodiments of the present disclosure.
Fig. 12 shows a schematic view of a route planning system according to some embodiments of the present disclosure.

## DETAILED DESCRIPTION

It should be noted that: the relative arrangements, numerical expressions and numerical values of the components and steps elaborated in these embodiments do not limit the scope of the present disclosure, unless specifically stated otherwise.

Those skilled in the art may understand that the terms such as "first" and "second" in the embodiment of the present disclosure which are only used to distinguish different steps, devices, or modules, do not represent any specific technical meaning or an inevitable logical sequence therebetween.

It should also be understood that, in the embodiment of the present disclosure, "a plurality of" may refer to two or more, and "at least one" may refer to one, two or more.

It should also be understood that any component, data or structure mentioned in the embodiment of the present disclosure may generally be understood as one or more unless explicitly defined or providing a contrary inspiration in the context.

In addition, the term "and/or" in the present disclosure is only an associated relationship to describe associated objects, which presents that there are three relationships, for example, A and/or B, which indicates: such three situations as A present alone, A and B present at the same time, and B present alone. In addition, the character "/" in the present disclosure generally indicates an "or" relationship between associated objects before and after in the context.

It should also be understood that the description of various embodiments in the present disclosure focuses on emphasizing the differences between various embodiments, and for the same or similar aspects thereof, reference may be made to each other, which will not be described in detail one by one for the sake of brevity.

At the same time, it should be understood that, for ease of description, the sizes of various parts shown in the accompanying drawings are not drawn according to actual proportional relations.

The following descriptions of at least one exemplary embodiment which are in fact merely illustrative, shall by no means serve as any delimitation on the present disclosure as well as its application or use.

The techniques, methods, and devices known to those of ordinary skill in the relevant art might not be discussed in detail. However, the techniques, methods, and devices shall be considered as part of the description where appropriate.

It is to be noted that: similar signs and letters present similar items in the following accompanying drawings, and therefore, once an item is defined in one accompanying drawing, a further discussion thereof is not required in subsequent accompanying drawings.

In addition, in order to avoid obscuring the present disclosure due to unnecessary details, only the processing steps and/or device structures closely related to the solution at least according to the present disclosure are shown in the accompanying drawings, and other details slightly related with the present disclosure are omitted. It should also be noted that, similar signs and letters in the accompanying drawings indicate similar items, and therefore once one item is defined in one accompanying drawing, a further discussion thereof is not required in subsequent accompanying drawings.

In some embodiments of the present disclosure, a seed task that a robot must perform is determined according to priority of tasks and distance between the robot and storage locations corresponding to the tasks, a task set to be planned is determined based on the seed task, and a task set required to be performed by the robot and a performing route are determined according to the selected results of various tasks and various road sections that makes the route of the objective function shortest in case that the constraint condition is satisfied. Therefore, the overall route is made to be shortest to maximize the overall efficiency in case that the priority of tasks is ensured.

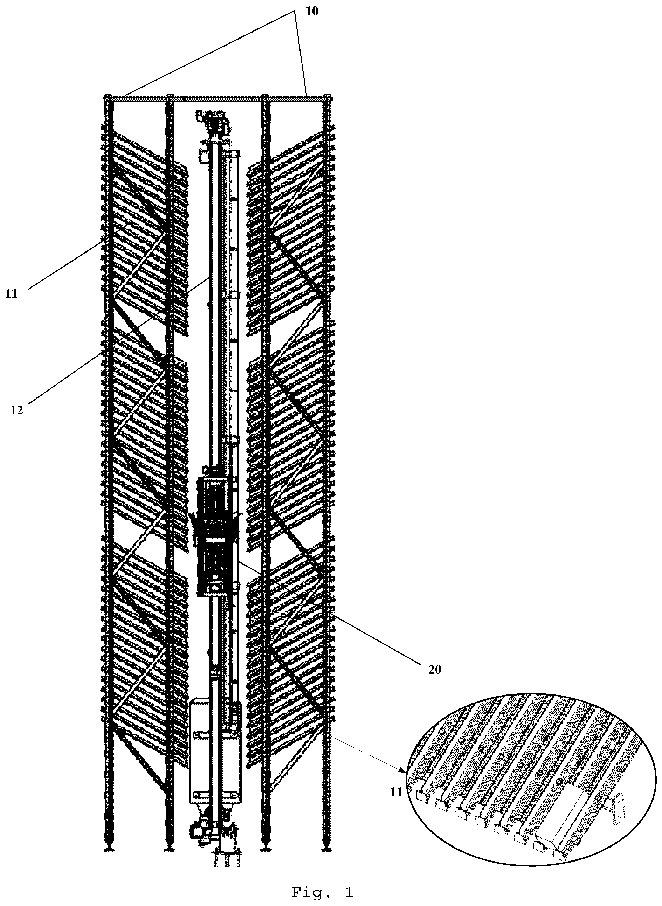

Fig. 1 shows a schematic view of a shelf and a robot according to some embodiments of the present disclosure. As shown in Fig. 1, the shelf 10 is provided with a plurality of storage locations 11. Each storage location is composed of inclined support plates. Goods may be placed in the storage location 11. A robot 20 is provided in a lane between two shelves 10. The robot 20 runs along a traveling mechanism 12 arranged on the shelf 10, so as to pick the goods or/and take stock of the goods in each storage location 11. Wherein stocktaking is to perform video stocktaking of the goods in a storage location without picking the goods in the storage location. As required, the robot 20 may or may not possess both a goods picking function and a goods stocktaking function. Wherein the robot 20 with a goods picking function is also referred to as a robot for picking goods.

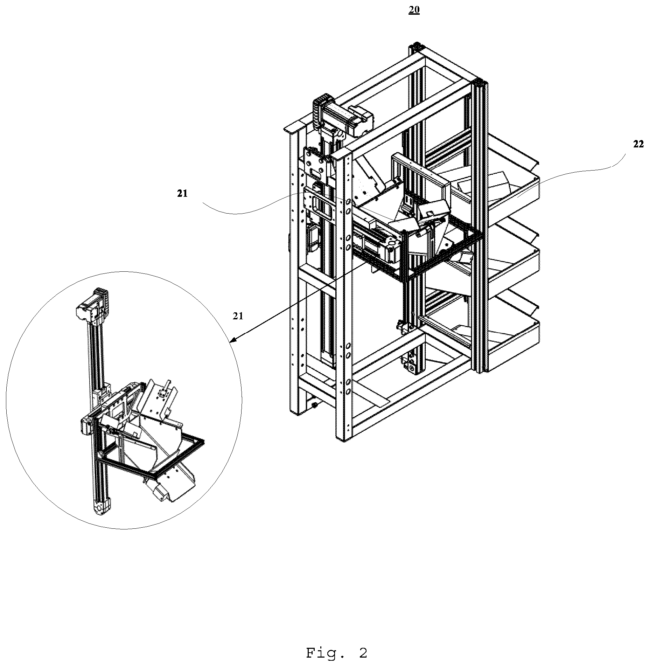

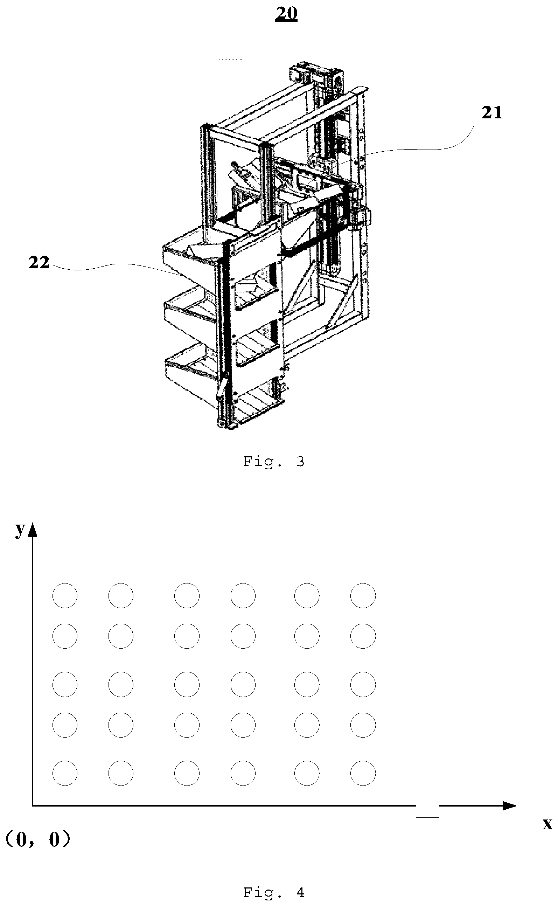

Fig. 2 and Fig.3 show perspective schematic views of a forward angle of view and a backward angle of view of a robot for picking goods according to some embodiments of the present disclosure respectively. As shown in Fig. 2 and Fig.3, the robot for picking goods comprises a picking mechanism 21 and a temporary storage device 22. The temporary storage device 22 is also vividly referred to as a temporary storage pack basket. Whenever one piece of goods is picked, the picking mechanism 21 may move to dock with a temporary storage device 22 and send the goods into the temporary storage device 22 for temporary storage. Each temporary storage device 22 corresponds to a pickup task, and each pickup task may comprise one or more goods, wherein a plurality of goods may come from the same storage location or different storage locations. When the pickup tasks of all the temporary storage devices 22 are completed, the robot for picking goods may run to a dumping point to unload the goods in the temporary storage devices 22. If the pickup task is a customer order task, the unloaded goods will proceed with the work such as packaging for outbound. If the pickup task is a non-customer order task, for example, a task such as allocation inside a warehouse or returning goods to a supplier, the unloaded goods may be transferred to other warehouses or shelves or designated return locations.

Based on actual deployment conditions of facilities such as shelves, storage locations thereof and dumping points in the warehouse, warehouse map data is initialized. For example, in a schematic view of warehouse map data as shown in Fig. 4, a lower left corner of a lane is taken as an origin (0,0), a direction along an extension direction of a lane as an x axis, and a direction perpendicular to an extension direction of a lane as a y axis. According to a physical distance, x and y coordinates of each storage location (represented by a circle) are set, and x and y coordinates of a dumping point of a lane (represented by a block) are set.

According to at least one of a wave mode, a task type, an order type and merging time corresponding to a task, the priority of each task is determined. Thus, the priority information of a task is determined comprehensively from a plurality of dimensions. For example, according to at least one of a wave mode, a task type, an order type and merging time corresponding to a task, a priority score of each task is determined. According to the priority score of each task, priority scores of tasks is grouped and sequenced to determine a priority level of each task.

The wave mode indicates a level of a time interval between end time of a task wave and current time. The shorter the time interval is, the higher the level of a time interval and the higher the priority score of a wave mode will be. A plurality of task waves might pertain to the same wave mode. For example, the wave mode comprises an approaching wave mode, a normal wave mode and a cross-day wave mode. Wherein if the end time of a task wave is less than 2 hours from the current time, it belongs to an approaching wave mode, if the end time of a task wave is more than or equal to 2 hours and less than 24 hours from the current time, it belongs to a normal wave mode, and if the end time of a task wave is more than 24 hours from the current time, it belongs to a cross-day wave mode, However, it is not limited to the examples as listed.

The task type comprises, for example, a customer order task, a non-customer order task, and a stocktaking task. The customer order task which is oriented to a task of customer order, usually involves pickup task and outbound task. The non-customer order task, such as allocation inside a warehouse or returning goods to a supplier, usually involves pickup task. The stocktaking task is to perform video counting of the goods in a storage location without picking the goods in the storage location. Therefore, the customer order task and the non-customer order task both involve pickup task relative to the stocktaking task. According to service needs, a priority score of each task type is set. For example, the priority score is set in a descending order, which are a customer order task, a non-customer order task and a stocktaking task sequentially.

The order types comprise, for example, an order involving a single piece of goods, an order involving a plurality of pieces of goods, an accurately delivered order and the like. According to service needs, a priority score of each order type is set. For example, the priority score is set in a descending order, which are an accurately delivered order, a single piece of goods and an order involving a plurality of pieces of goods sequentially.

The merging time means that, for a merging order, if one lane task of the merging order has been assigned to a robot, a priority score of another lane task of the merging order will be raised to the highest value.

If a priority of each task is determined according to multiple items of a wave mode, a task type, an order type and merging time corresponding to a task, a weight of each item may be set. According to a weight of each item and a priority score of each item, a priority score of each task is obtained by weighted summation operation. For example, $y = \theta_1\alpha + \theta_2\beta + \theta_3\gamma + \theta_4\delta$, where $y$ represents a certain task and its priority score, $\alpha\beta\gamma\delta$ represents the priority scores of a wave mode, a task type, an order type and merging time respectively, and $\theta_1\theta_2\theta_3\theta_4$ represents a wave mode, a task type, an order type and merging time respectively. According to the priority score of each task, priority scores of tasks is grouped and sequenced to determine a priority level of each task. For example, the tasks with priority scores in a first range have a first priority level, where $T_1 = \{y_1y_2y_3 \ ... \ .\}$, the tasks with priority scores in a second range have a second priority level, where $T_2 = \{y_4y_5y_6 \ ... \ .\}$, and the tasks with priority scores in a third range have a third priority level, where $T_3 = \{y_7 ... \ .\}$. For a task set with the same priority level, tasks may be sequenced in a descending order according to priority scores.

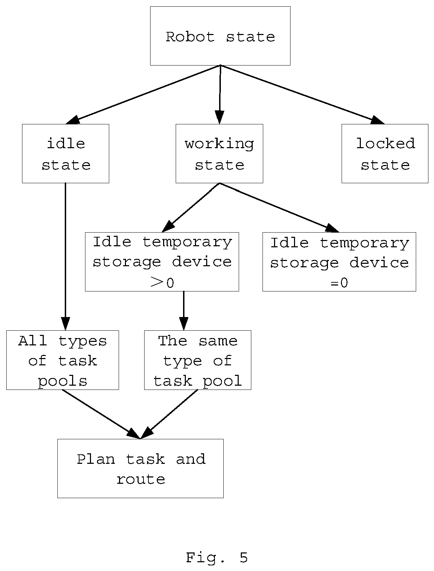

Based on the warehouse map data and a priority of each task, combined with an operation state of a robot, a task and a route are planned for each robot according to a route planning method. In the route planning method as shown in Fig. 5, the operation state of a robot comprises, for example, an idle state, a working state and a locked state. The robot in an idle state may undertake all types of services, and may plan a task and a route for the robot in an idle state based on all types of task pools. The robot in a working state may undertake a task of the same type as a current task, and may plan a task and a route for a robot in a working state with an idle temporary storage device based on a task pool of the same type as a current task. For a robot in a locked state and a robot without an idle temporary storage device, there is no need to plan a task or a route. The planned task and route may be assigned to a robot for execution. The route planning method will be specifically described in detail below.

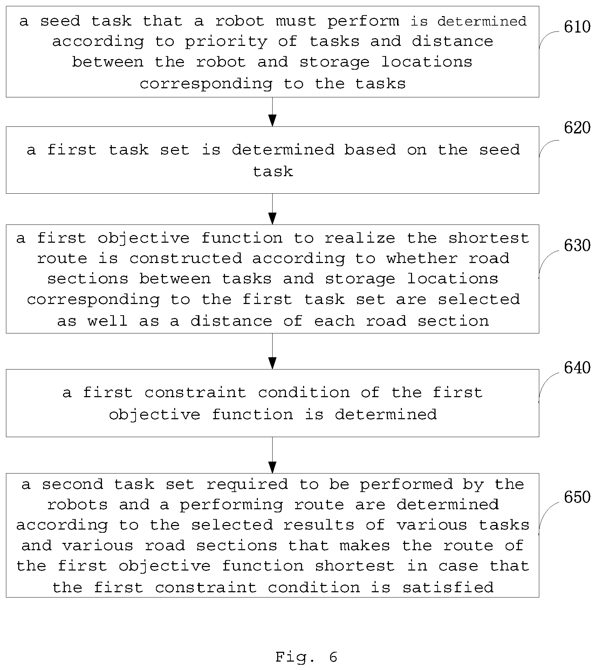

Fig. 6 shows a schematic view of a route planning method according to some embodiments of the present disclosure. The route planning method of this embodiment may be used to plan a route for a robot in an idle state, for example. The route planning method of this embodiment may be performed by a route planning device, for example.

As shown in Fig. 6, the operation state of a robot in each lane is queried. If there is a robot in an idle state, it is possible to plan a route for the robot according to the following method.

In Step 610, a seed task that a robot must perform is determined according to priority of tasks and distance between the robot and storage locations corresponding to the tasks. In this way, it is ensured that the seed tasks with a higher priority and a closer distance are performed in priority.

From various storage locations corresponding to a group of tasks with the highest priority, the storage location closest to the robot is selected as a seed storage location, which serves as a must-pass spot of the robot. The task corresponding to the seed storage is determined as a seed task that the robot must perform.

Taking the task priority $T_1T_2T_3$ determined previously as an example, a group of tasks with the highest priority is $T_1 = \{y_1y_2y_3 ... \ .\}$, and the corresponding storage location set is $P_1 = \{p_1p_2p_3p_4 \ ... \ .\}$. Assuming that the storage location closest to the robot in the location set is $p_1$, the seed storage location is $p_1$, and the task $y_1$ corresponding to the seed storage location is the seed task.

In Step 620, a first task set is determined based on the seed task.

In some embodiments, the first task set is determined based on the seed task, by combining at least one of task types or priority of tasks. For example, a seed task is added to the first task set; and a task is selected from non-seed tasks with the same task type as the seed task and added to a first task set. Thus, other tasks of the same type as the seed task are found.

Further, if there are a relatively large number of non-seed tasks with the same task type as the seed task, which exceeds an expected limit of the number of tasks in the first task set, a task may be selected and added to the first task set according to a priority of the task, and a task with a higher priority and the same task type is selected in priority.

For example, if other tasks $y_5 y_7$ of the same type as the seed task $y_1$ are found, the first task set is $T^1 = \{y_1 y_5 y_7 ... \}$, and the corresponding storage location set is $P^1 = \{p_1 p_5 p_7 ... \}$.

In Step 630, a first objective function to realize the shortest route is constructed according to whether road sections between tasks and storage locations corresponding to the first task set are selected as well as a distance of each road section.

Define the decision variables:

$$x_{ij} \triangleq \begin{cases} 1, \text{select a road section ij} \\ 0, \text{not select a road section ij} \end{cases}, i \neq j, i, j$$

represent storage locations, $i \in P^1$, $j \in P^1$.

Define

$$d_{ij} \triangleq \text{a distance cost of road section ij}.$$

Define a first objective function:

$$Z1 = \min \sum_{i \in P^1,} \sum_{j \in P^1,\ i \neq j} d_{ij} x_{ij}$$

Wherein min represents taking a minimum value.

In Step 640, a first constraint condition of the first objective function is determined. The first constraint condition comprises constraint conditions, such as storage location selection, a starting point, a destination point, and the number of tasks.

Wherein the first constraint condition comprises: (1) all the storage locations of the seed task must be selected. In this way, it is ensured that the seed task with a high priority and close to the robot is performed in priority.

Wherein the first constraint condition also comprises one or more of the following: (2) all storage locations of a task are selected at the same time, or none of the storage locations of a task are selected at the same time, so that in case that a task involves a plurality of storage locations, the task is completely performed or not performed, which avoids the condition of partially performing the task and improves the task performing efficiency; (3) the starting point is a current position of the robot, only with an exit; (4) a storage location is selected at most once, so that all the tasks involved in a storage location may be performed at the same time, which avoids the condition that this storage location is picked for multiple times due to multiple tasks, and improves the task performing efficiency; (5) a storage location has an exit and an entrance in case that the storage location is selected. The exit and the entrance are provided to obtain a road section with a direction. The entrance is directed to a direction in which the robot enters the storage location and the exit is directed to a direction in which the robot departs from the storage location. In this way, the storage location is selected according to the value of the decision variable $x_{i,j}$, and the picking order of the storage location route is selected according to the direction.

Wherein in case that the seed task involves a pickup task, the first constraint condition also comprises one or more of the following: (6) the destination point is a dumping point, only with an entrance; (7) n tasks are selected at most, wherein n is the number of idle temporary storage devices of the robot, and each temporary storage device is configured to place the goods corresponding to a task. As described previously, the customer order task and the non-customer order task involve a pickup task, wherein the pickup task needs to use a temporary storage device and a dumping point, while the stocktaking task does not need to use a temporary storage device and a dumping point, so that these constraint conditions may not be set.

Therefore, the first constraint conditions (1) to (5) are not only applicable to a pickup task, for example, a customer order task and a non-customer order task, but also applicable to a stocktaking task, and the first constraint conditions (6) to (7) are applicable to a pickup task.

In Step 650, a second task set required to be performed by the robots and a performing route are determined according to the selected results of various tasks and various road sections that makes the route of the first objective function shortest in case that the first constraint condition is satisfied. Wherein the second task set is a subset of the first task set, which may be specifically determined according to the first objective function and its first constraint conditions.

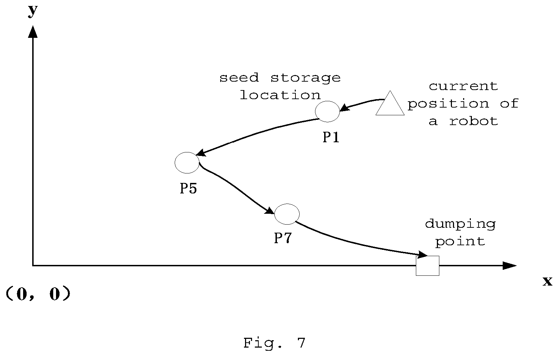

Assuming that the first task set is $T^1 = \{y_1 y_5 y_7 ... \}$, the corresponding storage location set is $= \{p_1 p_5 p_7 ... \}$, $p_1$ is the seed storage location, and $y_1$ is the seed task. As shown in Fig. 7, assuming that the second task set is also $T^2 = \{y_1 y_5 y_7 ... \}$, the corresponding storage location set is $P^2 = \{p_1 p_5 p_7 ....\}$, and the shortest route is: a current position of the robot $\rightarrow p_1 \rightarrow p_5 \rightarrow p_7 \rightarrow$ a dumping point.

A seed task that a robot must perform is determined according to priority of tasks and distance between the robot and storage locations corresponding to the tasks, a task set to be planned is determined based on the seed task, and a task set required to be performed by the robot and a performing route are determined according to the selected results of various tasks and various road sections that makes the route of the objective function shortest in case that the constraint condition is satisfied. Therefore, the overall route is made to be shortest to maximize the overall efficiency in case that the priority of tasks is ensured.

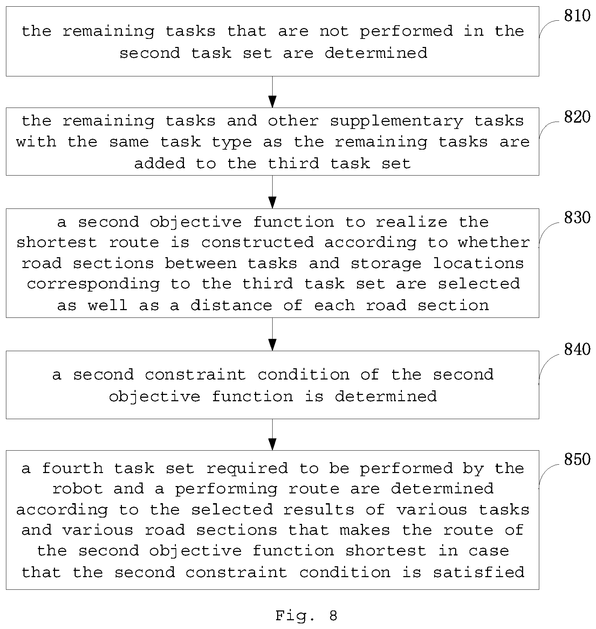

Fig. 8 shows a schematic view of a route planning method according to some embodiments of the present disclosure. The route planning method of this embodiment may be used to plan a route for a robot in a working state, for example. The route planning method of this embodiment may be performed by a route planning device, for example.

As shown in Fig. 8, the robot in a working state may supplement a task and re-plan a route according to the following route planning method.

In Step 810, the remaining tasks that are not performed in the second task set are determined.

Assuming that the remaining tasks that are not performed in the second task set are $T_d^2 = \{y_7\}$, the corresponding storage location set is $P_d^2 = \{p_7\}$.

In Step 820, the remaining tasks and other supplementary tasks with the same task type as the remaining tasks are added to the third task set.

Assuming that the third task set is $T^3 = \{y_7 y_8\}$, the corresponding storage location set is $P^3 = \{p_7 p_8 ....\}$, the remaining task $y_7$ has the same task type as the supplementary task $y_8$.

In Step 830, a second objective function to realize the shortest route is constructed according to whether road sections between tasks and storage locations corresponding to the third task set are selected as well as a distance of each road section.

Define the decision variables:

$$x_{ij} \triangleq \begin{cases} 1, \text{select a road section} c\ ij \\ 0, \text{not select a road section } ij \end{cases},$$

$i \neq j$, i, j represents storage locations, $i \in P^3$, $j \in P^3$

Define

$$d_{ij} \triangleq \text{a distance cost of road segment } ij.$$

Define a second objective function:

$$Z2 = \min \sum_{i \in P^3, \ j \in P^3, \ i \neq j} d_{ij} x_{ij}$$

Wherein min represents taking a minimum value.

In Step 840, a second constraint condition of the second objective function is determined. The second constraint condition comprises constraint conditions, such as storage location selection, a starting point, a destination point, and the number of tasks.

Wherein the second constraint condition comprises: (1) all the storage locations corresponding to the remaining tasks, for example, $P_d^2$, must be selected. In this way, it is ensured that the remaining tasks are performed.

Wherein the second constraint condition also comprises one or more of the following: (2) all storage locations of a task are selected at the same time, or none of the storage locations of a task are selected at the same time, so that in case that a task involves a plurality of storage locations, the task is completely performed or not performed, which avoids the condition of partially performing the task and improves the task performing efficiency; (3) the starting point is a current position of the robot, only with an exit; (4) a storage location is selected at most once, so that all the tasks involved in a storage location may be performed at the same time, which avoids the condition that this storage location is picked for multiple times due to multiple tasks, and improves the task performing efficiency; (5) a storage location has an exit and an entrance in case that it is selected. The exit and the entrance are provided to obtain a road section with a direction. In this way, the storage location is selected according to the value of the decision variable $x_{i,j}$, and the picking order of the storage location route is selected according to the direction.

In case that the seed task involves a pickup task, the second constraint condition also comprises one or more of the following: (6) the destination point is a dumping point, only with an entrance; (7) m tasks are supplemented at most, wherein m is the number of remaining temporary storage devices of the robot, and each temporary storage device is configured to place the goods corresponding to a task. The remaining temporary storage devices are storage devices without assigned tasks. As described previously, the customer order task and the non-customer order task involve a pickup task, wherein the pickup task needs to use a temporary storage device and a dumping point, while the stocktaking task does not need to use temporary storage device and a dumping point, so that these constraint conditions may not be set.

Therefore, the second constraint conditions (1) to (5) are not only applicable to a pickup task, for example, a customer order task and a non-customer order task, but also applicable to a stocktaking task, and the second constraint conditions (6) to (7) are applicable to a pickup task.

In Step 850, a fourth task set required to be performed by the robot and a performing route are determined according to the selected results of various tasks and various road sections that makes the route of the second objective function shortest in case that the second constraint condition is satisfied. Wherein the fourth task set is a subset of the third task set, which may be specifically determined according to the second objective function and its second constraint condition.

If all the tasks in the second task set are not performed, the tasks in the second task set and supplementary tasks re-determine the tasks required to be executed and their performing routes according to the method of this embodiment. If some tasks in the second task set have been performed, the tasks not performed in the second task set and supplementary tasks re-determine the tasks required to be executed and their performing routes according to the method of this embodiment.

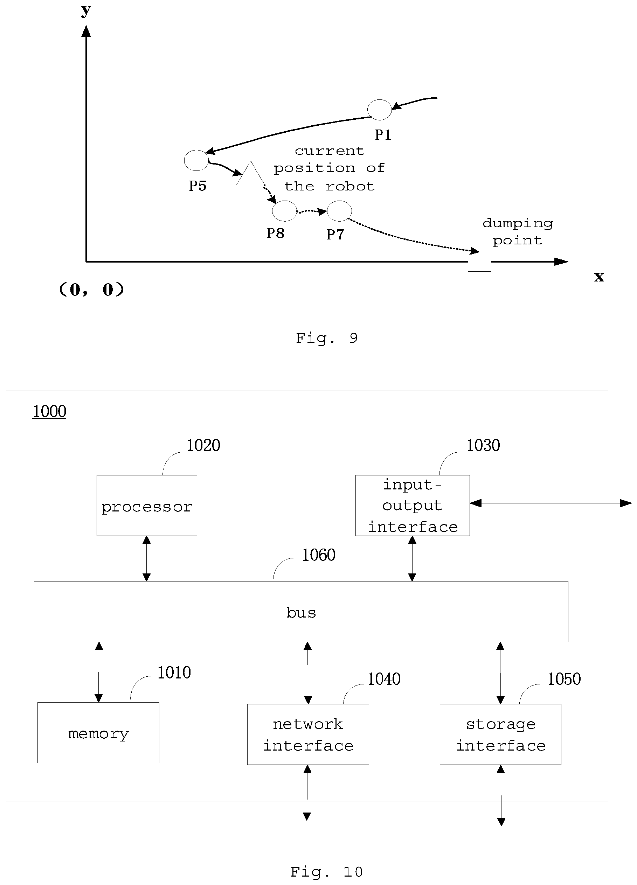

For example, assuming that the third task set is $T^3 = \{y_7 y_8\}$, the corresponding storage location set is $P^3 = \{p_7 p_8 ....\}$. As shown in Fig. 9, assuming that the fourth task set is also $T^4 = \{y_7 y_8\}$, the corresponding storage location set is $P^4 = \{p_7 p_8 ... .\}$, and the shortest route corresponding to the fourth task set is : a current position of the robot $\rightarrow p_8 \rightarrow p_7 \rightarrow$ a dumping point.

A seed task that a robot must perform is determined according to priority of tasks and distance between the robot and storage locations corresponding to the tasks, a task set to be planned is determined based on the seed task, and a task set required to be performed by the robot and a performing route are determined according to the selected results of various tasks and various road sections that makes the route of the objective function shortest in case that the constraint condition is satisfied. Therefore, the overall route is made to be shortest to maximize the overall efficiency in case that the priority of tasks is ensured.

According to the remaining tasks not performed in the second task set and other supplementary tasks added with the same task type as the remaining tasks, a task set to be planned is determined, and a task set required to be performed by the robot and a performing route are determined according to the selected results of various tasks and various road sections that makes the route of the objective function shortest in case that the constraint condition is satisfied. Therefore, it is possible to not only dynamically supplement new tasks of the same type, but also ensure the shortest route.

Fig. 10 shows a schematic structural view of a route planning device according to some embodiments of the present disclosure. As shown in Fig. 10, the route planning device 1000 in this embodiment comprises: a memory 1010; and a processor 1020 coupled to the memory 1010, wherein the processor 1020 is configured to perform the route planning method according to any some of the foregoing embodiments based on the instructions stored in the memory 1010.

The route planning device 1000 may further comprise an input-output interface 1030, a network interface 1040, a storage interface 1050, and the like. These interfaces 1030, 1040, 1050 as well as the memory 1010 and the processor 1020 therebetween may be connected, for example, via a bus 1060.

Wherein the memory 1010 may comprise, for example, a system memory, a fixed non-volatile storage medium, or the like. The system memory stores, for example, an operation system, an application program, a boot loader, and other programs.

Wherein the processor 1020 may be implemented as a general-purpose processor, a digital signal processor (DSP), an application specific integrated circuit (ASIC), a field programmable gate array (FPGA) or other programmable logic devices, and discrete hardware components such as discrete gates or transistors.

Wherein the input-output interface 1030 provides a connection interface for input/output devices such as a display, a mouse, a keyboard, and a touch screen. The network interface 1040 provides a connection interface for various networked devices. The storage interface 1050 provides a connection interface for an external storage device such as an SD card or a USB flash disk. The bus 1060 may use any of a plurality of bus structures. For example, the bus structures comprise, but are not limited to, an Industry Standard Architecture (ISA) bus, a Microchannel Architecture (MCA) bus and a Peripheral Component Interconnection (PCI) bus.

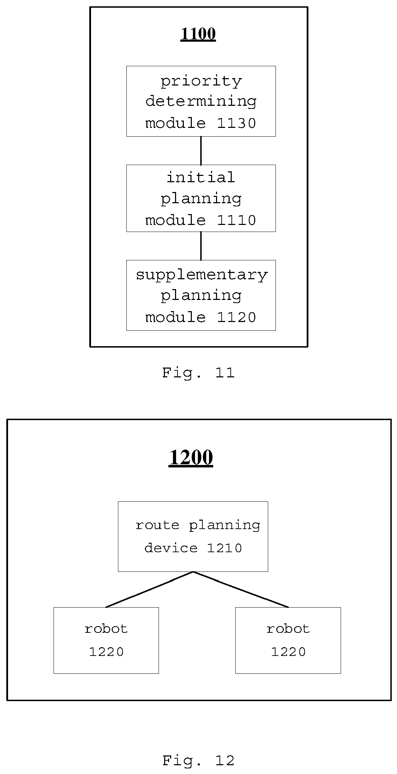

Fig. 11 shows a schematic structural view of a route planning device according to some embodiments of the present disclosure. As shown in Fig. 11, the route planning device 1100 of this embodiment comprises: a module for performing a route planning method.

The initial planning module 1110 is configured to determine a seed task that a robot must perform according to priority of tasks and distance between the robot and storage locations corresponding to the tasks; determine a first task set based on the seed task; construct a first objective function to realize the shortest route according to whether road sections between tasks and storage locations corresponding to the first task set are selected as well as a distance of each road section; determine a first constraint condition of the first objective function; and determine a second task set required to be performed by the robot and a performing route according to the selected results of various tasks and various road sections that makes the route of the first objective function shortest in case that the first constraint condition is satisfied.

Wherein from various storage locations corresponding to a group of tasks with a highest priority, the storage location closest to the robot is selected as a seed storage location; and the task corresponding to the seed storage is determined as the seed task that the robot has to perform.

Wherein the seed task is added to the first task set; and a task is selected from non-seed tasks with the same task type as the seed task and added to a first task set.

The supplementary planning module 1120 is configured to determine the remaining tasks that are not performed in the second task set; add the remaining tasks and other supplementary tasks with the same task type as the remaining tasks to a third task set; construct a second objective function to realize the shortest route according to whether road sections between tasks and storage locations corresponding to the third task set are selected as well as a distance of each road section;

determine a second constraint condition of the second objective function; and determine a fourth task set required to be performed by the robot and a performing route according to the selected results of various tasks and various road sections that makes the route of the second objective function shortest in case that the second constraint condition is satisfied.

The priority determining module 1130 is configured to determine a priority of a task according to at least one of a wave mode, a task type, an order type and merging time corresponding to the task.

Fig. 12 shows a schematic view of a route planning system according to some embodiments of the present disclosure. As shown in Fig. 12, the route planning system 1200 of this embodiment comprises: a route planning device 1210 and a robot 1220. The route planning device 1210 is, for example, the route planning devices 1000 and 1100. The route planning device 1210 may provide a route planning service for a plurality of robots 1220.

Those skilled in the art will appreciate that the embodiments of the present disclosure may be provided as a method, system, or computer program product. Therefore, the present disclosure may take the form of a hardware only embodiment, a software only embodiment, or an embodiment combining software and hardware aspects. Moreover, the present disclosure may take the form of a computer program product embodied in one or more non-transitory computer-readable storage media (comprising but not limited to disk memory, CD-ROM, optical memory, cloud storage and the like) containing computer program codes therein. The computer program product should be understood as a software product which mainly realizes its solution through a computer program.

The present disclosure is described with reference to the flow charts and/or block diagrams of methods, devices (systems), and computer program products according to the embodiments of the present disclosure. It will be understood that each step and/or block of the flow charts and/or block diagrams as well as a combination of steps and/or blocks of the flow charts and/or block diagrams may be implemented by a computer program instruction. These computer program instructions may be provided to a processor of a general purpose computer, special purpose computer, an embedded processing machine, or other programmable data processing devices to produce a machine, such that the instructions executed by a processor of a computer or other programmable data processing devices produce a device for realizing a function designated in one or more steps of a flow chart and/or one or more blocks in a block diagram.

These computer program instructions may also be stored in a computer readable memory that may guide a computer or other programmable data processing device to operate in a particular manner, such that the instructions stored in the computer readable memory produce a manufacture comprising an instruction device.

The instruction device realizes a function designated in one or more steps in a flow chart or one or more blocks in a block diagram.

These computer program instructions may also be loaded onto a computer or other programmable data processing devices, such that a series of operational steps are performed on a computer or other programmable device to produce a computer-implemented processing, such that the instructions executed on a computer or other programmable devices provide steps for realizing a function designated in one or more steps of the flow chart and/or one or more blocks in the block diagram.

The foregoing descriptions are only the preferred embodiments of the present disclosure, but do not serve to limit the present disclosure. Any amendment, equivalent replacement, improvement, and the like made within the spirit and principles of the present disclosure should all be contained within the protection scope of the present disclosure.

**Claims**

1. A route planning method, comprising:

   determining a seed task that a robot must perform according to priority of tasks and distance between the robot and storage locations corresponding to the tasks;
   determining a first task set based on the seed task;
   constructing a first objective function to realize the shortest route according to whether road sections between tasks and storage locations corresponding to the first task set are selected as well as a distance of each road section;
   determining a first constraint condition of the first objective function; and
   determining a second task set required to be performed by the robot and a performing route according to the selected results of various tasks and various road sections that makes the route of the first objective function shortest in case that the first constraint condition is satisfied.

2. The route planning method according to claim 1, wherein determining a seed task that a robot must perform comprises:

   selecting a storage location closest to the robot as a seed storage location from various storage locations corresponding to a group of tasks with a highest priority; and
   determining a task corresponding to the seed storage as the seed task that the robot must perform.

3. The route planning method according to any of claims 1 to 2, wherein the determining a first task set comprises:
determining the first task set based on the seed task, by combining at least one of task types or priority of tasks.

4. The route planning method according to any of claims 1 to 3, wherein determining a first task set comprises:

adding the seed task to the first task set; and selecting a task from non-seed tasks with the same task type as the seed task and adding the task to the first task set.

5. The route planning method according to any of claims 1 to 4, wherein the first constraint condition comprises: all storage locations of the seed task having to be selected.

6. The route planning method according to claim 5, wherein the first constraint condition also comprises one or more of:

all storage locations of a task being selected at the same time, or none of the storage locations of a task being selected at the same time;
a starting point being a current position of the robot, only with an exit;
a storage location being selected at most once; and
a storage location having an exit and an entrance in case that the storage location is selected.

7. The route planning method according to claim 6, wherein in case that the seed task involves a pickup task, the first constraint condition also comprises one or more of:

a destination point being a dumping point, only with an entrance; and
n tasks being selected at most, wherein n is the number of idle temporary storage devices of the robot, and each temporary storage device is configured to place the goods corresponding to a task.

8. The route planning method according to any of claims 1 to 7, further comprising:

determining the remaining tasks that are not performed in the second task set;
adding the remaining tasks and other supplementary tasks with the same task type as the remaining tasks to a third task set;
constructing a second objective function to realize the shortest route according to whether road sections between tasks and storage locations corresponding to the third task set are selected as well as a distance of each road section;
determining a second constraint condition of the second objective function; and
determining a fourth task set required to be performed by the robot and a performing route according to the selected results of various tasks and various road sections that makes the route of the second objective function shortest in case that the second constraint condition is satisfied.

9. The route planning method according to claim 8, wherein the second constraint condition comprises: all the storage locations corresponding to the remaining tasks having to be selected.

10. The route planning method according to claim 9, wherein the second constraint condition also comprises one or more of:

all storage locations of a task being selected at the same time, or none of the storage locations of a task being selected at the same time;
the starting point being a current position of the robot, only with an exit;
a storage location being selected at most once; and
a storage location having an exit and an entrance in case that it is selected.

11. The route planning method according to claim 10, wherein in case that the seed task involves a pickup task, the second constraint condition also comprises one or more of:

a destination point being a dumping point, only with an entrance; and
m tasks being supplemented at most, wherein m is the number of remaining temporary storage devices of the robot, and each temporary storage device is used to place the goods corresponding to a task.

12. The route planning method according to any of claims 1 to 11, further comprising:
determining a priority of a task according to at least one of a wave mode, a task type, an order type and merging time corresponding to the task.

13. A route planning device, comprising: a memory; and a processor coupled to the memory, wherein the processor is configured to perform the route planning method according to any of claims 1 to 12 based on instructions stored in the memory.

14. A route planning device, comprising: a module to perform the route planning method according to any of claims 1 to 12.

**15.** A computer readable storage medium stored computer instructions which, when executed by a processor, implement the route planning method according to any of claims 1 to 12.

**16.** A computer program product, comprising computer instructions which, when executed by a processor, implement the route planning method according to any of claims 1 to 12.

**17.** A computer program, comprising:
instructions which, when executed by a processor, cause the processor to perform the route planning method according to any of claims 1 to 12.

Fig. 1

Fig. 2

**20**

Fig. 3

Fig. 4

Fig. 5

a seed task that a robot must perform is determined according to priority of tasks and distance between the robot and storage locations corresponding to the tasks — 610

a first task set is determined based on the seed task — 620

a first objective function to realize the shortest route is constructed according to whether road sections between tasks and storage locations corresponding to the first task set are selected as well as a distance of each road section — 630

a first constraint condition of the first objective function is determined — 640

a second task set required to be performed by the robots and a performing route are determined according to the selected results of various tasks and various road sections that makes the route of the first objective function shortest in case that the first constraint condition is satisfied — 650

Fig. 6

Fig. 7

the remaining tasks that are not performed in the second task set are determined — 810

the remaining tasks and other supplementary tasks with the same task type as the remaining tasks are added to the third task set — 820

a second objective function to realize the shortest route is constructed according to whether road sections between tasks and storage locations corresponding to the third task set are selected as well as a distance of each road section — 830

a second constraint condition of the second objective function is determined — 840

a fourth task set required to be performed by the robot and a performing route are determined according to the selected results of various tasks and various road sections that makes the route of the second objective function shortest in case that the second constraint condition is satisfied — 850

Fig. 8

Fig. 9

Fig. 10

**1100**

priority
determining
module 1130

initial
planning
module 1110

supplementary
planning
module 1120

Fig. 11

**1200**

route planning
device 1210

robot
1220

robot
1220

Fig. 12

## INTERNATIONAL SEARCH REPORT

| International application No. |
|---|
| **PCT/CN2024/140476** |

| A. | CLASSIFICATION OF SUBJECT MATTER |
|---|---|
| | B65G1/137(2006.01)i; B65G1/04(2006.01)i |

According to International Patent Classification (IPC) or to both national classification and IPC

| B. | FIELDS SEARCHED |
|---|---|

Minimum documentation searched (classification system followed by classification symbols)

IPC:B65G

Documentation searched other than minimum documentation to the extent that such documents are included in the fields searched

Electronic data base consulted during the international search (name of data base and, where practicable, search terms used)

CNTXT, ENTXTC, WPABS, CJFD, CNKI: 北京京东, 仓储, 出库, 拣货, 机器人, 货架, 距离, 路线, 最短, 最近, warehouse, storage, delivery, pick, robot, shelf, distance, path, shortest, nearest

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 115983553 A (ZHEJIANG HUAGONG CYBER DATA SYSTEM CO., LTD.) 18 April 2023 (2023-04-18)<br>see description, paragraphs [0053]-[0154], and figures 1-6 | 1-17 |
| Y | CN 117533690 A (SHENZHEN HENGSHUNHEXIN TECHNOLOGY CO., LTD.) 09 February 2024 (2024-02-09)<br>see description, paragraphs [0022]-[0047], and figures 1-3 | 1-17 |
| A | CN 114418205 A (ALPHA SMART MEDICAL TECHNOLOGY (SHANGHAI) CO., LTD.) 29 April 2022 (2022-04-29)<br>see entire document | 1-17 |
| A | CN 111409997 A (DALIAN MARITIME UNIVERSITY) 14 July 2020 (2020-07-14)<br>see entire document | 1-17 |
| A | CN 115437372 A (INSTITUTE OF AUTOMATION, CHINESE ACADEMY OF SCIENCES) 06 December 2022 (2022-12-06)<br>see entire document | 1-17 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **16 June 2025** | **27 June 2025** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/140476** |

| C. | DOCUMENTS CONSIDERED TO BE RELEVANT | | |
| --- | --- | --- |
| Category* | Citation of document, with indication, where appropriate, of the relevant passages | Relevant to claim No. |
| A | CN 110262472 A (BEIJING JINGDONG SHANGKE INFORMATION TECHNOLOGY CO., LTD. et al.) 20 September 2019 (2019-09-20)<br>see entire document | 1-17 |

Form PCT/ISA/210 (second sheet) (July 2022)

**INTERNATIONAL SEARCH REPORT**
Information on patent family members

International application No.

**PCT/CN2024/140476**

| Patent document cited in search report | | | Publication date (day/month/year) | Patent family member(s) | Publication date (day/month/year) |
|---|---|---|---|---|---|
| CN | 115983553 | A | 18 April 2023 | None | |
| CN | 117533690 | A | 09 February 2024 | None | |
| CN | 114418205 | A | 29 April 2022 | None | |
| CN | 111409997 | A | 14 July 2020 | None | |
| CN | 115437372 | A | 06 December 2022 | None | |
| CN | 110262472 | A | 20 September 2019 | None | |

Form PCT/ISA/210 (patent family annex) (July 2022)

**EP 4 772 457 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411433838X